# EUROPEAN PATENT SPECIFICATION

(11) **EP 2 604 878 B1**
(45) Date of publication and mention of the grant of the patent: **05.02.2020**
(21) Application number: 12196140.3
(22) Date of filing: 07.12.2012
(51) Int. Cl.: F16D 11/04, F16D 11/14

(54) **Drive coupling device**
Antriebskopplungsvorrichtung
Dispositif de couplage d'entraînement

(30) Priority: 13.12.2011 GB 201121364
(43) Date of publication of application: 19.06.2013
(73) Proprietor: SAFRAN Power UK Ltd., Pitstone Green, Buckinghamshire LU7 9GT (GB)
(72) Inventor: Hearn, Stephen Mark, Waltham Cross, Hertfordshire EN7 6NR (GB); Mitcham, Bryan Robert, Buckingham, Buckinghamshire MK18 3BD (GB)
(74) Representative: Regimbeau

(56) References cited:
- EP-A2- 0 545 004
- EP-A2- 2 098 740
- US-A- 4 271 947
- US-A1- 2011 299 971

## Description

This invention relates to a drive coupling device, and in particular to a drive coupling device suitable for use in connecting a gearbox output to an electrical generator.

In aerospace applications it is commonplace to provide a gearbox that is driven from a rotary part of an engine. Such an arrangement may be used to drive a number of aircraft mounted components or devices for operation. One of the devices typically driven in this manner is an electrical generator used to supply electrical power to a number of electrical devices provided on the aircraft.

The drive coupling device coupling the gearbox output to the rotor of such a generator is conveniently designed in such a manner that the coupling can be disconnected, for example in the event of a failure within the generator. Disconnection of such drive is beneficial in that the gearbox and other devices driven therefrom can continue to operate normally in the event of a jam within the generator, and also damage to the generator can be restricted.

A known form of drive coupling device suitable for use in this application is described in US6938746. This arrangement comprises an outer rotatable drive shaft, sometimes referred to as an outer quill shaft, arranged to cooperate with the gearbox and to be driven therefrom, and an inner rotatable drive shaft, sometimes referred to as an inner quill shaft, which is in splined, drivable connection with a rotor of the generator, and is arranged coaxially with the outer drive shaft. The inner drive shaft and outer drive shaft engage one another by way of a dog clutch arrangement which can be released upon axial movement of the inner drive shaft away from the outer drive shaft.

With such an arrangement, in normal use the inner drive shaft is spring biased towards the outer drive shaft so that the dog clutch arrangement is engaged and rotation of the outer drive shaft by the gearbox is transmitted to the inner drive shaft, and from the inner drive shaft to the rotor of a generator. In the event of a failure or jam occurring within the generator, an actuator arrangement is operated to cause axial displacement of the inner drive shaft away from the outer drive shaft to disengage the clutch, and disconnect the generator rotor from the gearbox output.

The outer drive shaft is mounted upon a support rod which, in normal use, rotates with the rotor of the generator. In the event of a drive disconnect occurring, rotation of the rod will cease. As release of the dog clutch arrangement allows the outer drive shaft to continue to rotate, driven by the gearbox, the outer drive shaft is mounted upon bearings carried by the rod to accommodate such rotation.

With such an arrangement it is important to ensure that the inner and outer drive shafts are accurately aligned with one another as misalignment, even slight misalignment, can result in increased wear between parts of the drive coupling device which could negatively impact upon the operation thereof. For example, a spacer is typically provided between the inner and outer drive shafts to control the separation between the ends thereof and to set the position occupied by the inner drive shaft when the dog clutch is engaged. In normal use, there should be no relative movement between the spacer and the inner and outer drive shafts. However, centrifugal forces and misalignment may give rise to limited radial movement. Such movement may cause wear of the spacer and/or cooperating surfaces of the inner and outer drive shaft. Such wear may result, over time, in the inner and outer drive shafts becoming incorrectly spaced. The reduced spacing between the inner and outer drive shafts may impact upon the operation of the actuator arrangement used to cause axial displacement of the inner drive shaft, and so may hinder or prevent disconnection of the drive coupling arrangement. The reduced spacing may also cause wear of the engaging faces of the inner and outer drive shaft and/or dog clutch formations.

Furthermore, as the outer drive shaft is supported, by bearings, upon the support rod, any misalignment may place additional loadings on these bearings, and also upon the bearings supporting the rotor of the generator, which is connected to the support rod, leading to an increased risk of wear or failure thereof.

It is also thought that, in the arrangement outlined hereinbefore, insufficient support for the spring which biases the inner drive shaft to a position in which the dog clutch is engaged may give rise to fretting and wear between the inner drive shaft and the spring.

Another releasable power transmission coupling arrangement is described in WO2011/061140.

Furthermore, a rotary drive shaft disconnect mechanism for use between an aircraft engine and a generator assembly is known from US-A-4 271 947.

It is an object of the invention to provide a drive coupling device in which at least some of the disadvantages set out above are overcome or are of reduced effect.

According to the invention there is provided a drive coupling device as defined in claim 1.

The drive coupling device according to the invention comprises an outer drive shaft adapted to be driven for rotation by a gearbox output, an outer quill shaft coupled to the outer drive shaft and arranged to be driven for rotation thereby, an inner quill shaft arranged coaxially with the outer quill shaft and moveable, axially, between an engaged position in which a dog clutch arrangement is engaged to transmit drive between the outer quill shaft and the inner quill shaft, and a disengaged position in which the dog clutch arrangement is disengaged, a support rod, and support bearing means provided on the support rod and by which the outer quill shaft is supported for rotation relative to the support rod, wherein the outer quill shaft is further supported, when the dog clutch arrangement is engaged, by the inner quill shaft.

The inner quill shaft includes a sleeve within which a part of the outer quill shaft is located, the sleeve providing support for the outer quill shaft when the dog clutch arrangement is engaged.

In use, the drive coupling device operates as outlined above, permitting the transmission of drive from a gearbox to a rotor connected to the inner quill shaft to allow the rotor to be driven for rotation and thereby drive a generator, of which the rotor forms part, for operation. In the event of a failure or jam occurring within the generator, the inner quill shaft can be moved axially to disengage the dog clutch arrangement and thereby terminate the transmission of drive from the gearbox to the rotor.

It will be appreciated that, in such an arrangement, as the outer quill shaft is supported, in part, by the inner quill shaft, relative radial movement therebetween, and hence wear therebetween, is reduced and so at least some of the disadvantages mentioned hereinbefore are overcome. Also, the application of increased loadings to the support bearing means arising from such misalignment can be reduced or avoided.

When the inner quill shaft and outer quill shaft are positioned such that the dog clutch arrangement is disengaged, the support bearing means serves to support the outer quill shaft for rotation. In this position, the inner and outer quill shafts do not engage one another, and so the outer quill shaft is no longer supported by the inner quill shaft. In order to achieve this, the part of the outer quill shaft located, in use, within the sleeve is conveniently of stepped form, including a support section which, when the dog clutch is engaged, is located within and engages the sleeve, and which is retracted from the sleeve when the dog clutch is disengaged, and a reduced diameter section. By ensuring that there is a clearance between the inner and outer quill shafts when the dog clutch arrangement is disengaged, the risk of friction welding therebetween, when the dog clutch arrangement is not engaged is reduced.

The outer drive shaft is conveniently coupled to the outer quill shaft by a splined coupling. It will be appreciated that the splined coupling can accommodate slight misalignments between the outer drive shaft and the outer quill shaft, and so avoid transmitting loads arising therefrom to the outer quill shaft.

Preferably, an actuator arrangement is provided to drive the inner quill shaft for axial movement relative to the outer quill shaft.

The outer drive shaft is conveniently of two part form. For example, the two parts of the outer drive shaft may be secured to one another using an electron beam welding technique. It will be appreciated, however, that other techniques for securing the two parts of the outer drive shaft to one another are possible.

The invention will further be described, by way of example, with reference to the accompanying drawings, in which:
Figure 1 is a sectional view illustrating a typical drive coupling device;
Figure 2 is a view similar to Figure 1 illustrating part of a drive coupling device in accordance with one embodiment of the invention;
Figure 3 illustrates the drive coupling device of Figure 2 in a disconnected condition; and
Figure 4 is a diagrammatic perspective representation of the drive coupling device of Figures 2 and 3.

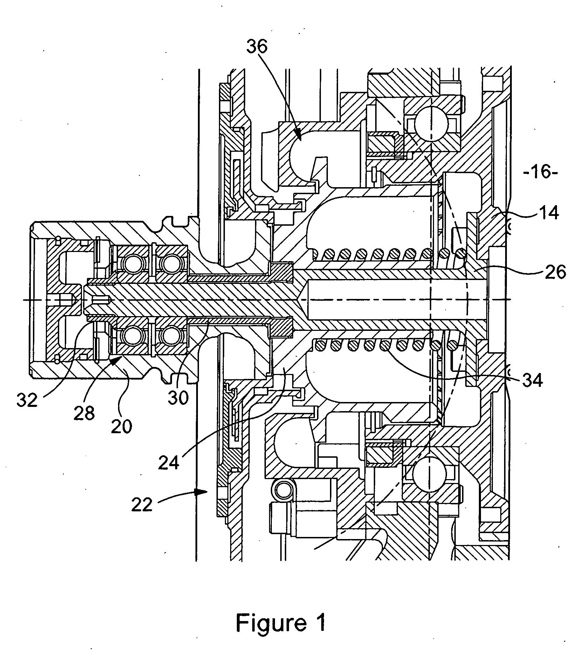

Referring firstly to Figure 1, as outlined hereinbefore, a drive coupling device is illustrated for use in coupling an output shaft from a gearbox (not shown) to a rotor 14 of an electrical generator 16. The drive coupling device includes an outer quill shaft 20 splined to the output shaft of the gearbox, and sealed thereto by a static seal (not shown). The outer quill shaft 20 projects from a housing 22 within which is located an inner quill shaft 24.

Connected to the rotor 14 and rotatable therewith is a support rod 26 upon which the inner quill shaft 24 is located, and upon an outer end of which is supported the outer quill shaft 20. it will be appreciated that there is a slight radial clearance between the support rod 26 and the inner quill shaft 24 to allow axial movement of the inner quill shaft 24 relative to the support rod 26 upon operation of a disconnect actuator arrangement 36. As illustrated, support bearings 28 are located between the support rod 26 and the outer quill shaft 20 so as to support the outer quill shaft 20 for rotation relative to the support rod 26 during operation of the disconnect. A collar or spacer 30 provided on the support rod 26 and a nut 32 threaded onto the support rod 26 serve to correctly locate the support bearings 28 on the rod 26. The support bearings 28 not only support the outer quill shaft 20 for rotation relative to the support rod 26 but also secure the outer quill shaft 20 against axial movement relative to the remainder of the drive coupling in normal use.

Dog dutch formations (not shown) are provided on the adjacent faces of the outer and inner quill shafts 20, 24, and the inner quill shaft 24 is axially movable between an engaged position in which the dog clutch formations are engaged so that drive is transmitted from the gearbox through the outer and inner quill shafts 20, 24 to the rotor of the generator, and a disengaged position in which such drive is no longer transmitted. A spring 34 urges the inner quill shaft 24 towards its engaged position.

The disconnect actuator arrangement 36 (not described herein in detail) is operable to drive the inner quill shaft 24 against the spring 34 for axial movement from the engaged position to the disengaged position when required.

In normal use, the inner quill shaft 24 occupies its engaged position, the spring 34 maintaining the inner quill shaft 24 in this position. In this position, the dog clutch formations are engaged. The operation of the gearbox to drive the output shaft thereof for rotation results in rotation of the outer and inner quill shafts 20, 24, and hence in rotation of the rotor 14 and operation of the generator 16. During such operation, the outer quill shaft 20 and support rod 26 will be rotating at the same speed and so the support bearings 28 do not need to accommodate relative angular or rotary motion, although may still serve to maintain the desired axial position of the outer drive shaft 20.

In the event of a failure or jam within the generator 16, the drive from the gearbox can be disconnected from the generator 16 by appropriate operation of the actuator arrangement 36 to shift the inner quill shaft 24 axially away from the outer quill shaft 20 to its disengaged position, disengaging the dog clutch formations. By disconnecting drive from the gearbox in this manner, the risk of damage to the generator 16 is reduced, and the impact upon the continued operation of other devices driven by the gearbox is reduced.

When the inner quill shaft 24 occupies its disengaged position, the drive from the gearbox is no longer transmitted through the drive coupling. The inner quill shaft 24 and support rod 26 will be stationary, but rotation of the outer quill shaft 20 will continue, such rotation of the outer quill shaft 20 relative to the support rod 26 being supported by the bearings 28.

As outlined hereinbefore, when the inner quill shaft 24 occupies its engaged position, if the inner and outer quill shafts 20, 24 are subjected to centrifugal forces or misalignment then during use limited radial sliding movement may occur between the engaged end faces and dog clutch formations thereof, and between the quill shafts 20, 24 and spacer 30. Such movement may result in wear of the engaged end faces of the respective components. Wear of the engaged end faces of the spacer 30 may result in the inner quill shaft 24 not occupying precisely its intended axial position, and this may impact upon the ability of the actuator arrangement 36 to drive the inner quill shaft 24 for axial movement to disconnect the drive coupling. Furthermore, as outlined hereinbefore, additional loadings may be applied to the support bearings 28 and support rod 26, and components upon which the support rod is mounted, which may cause increased wear or damage thereto.

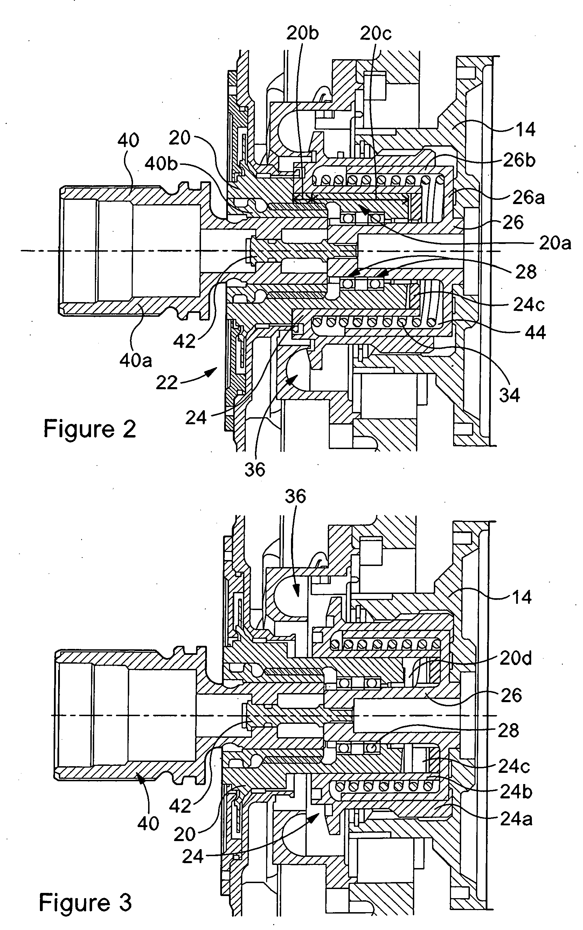

An embodiment of the invention is illustrated in Figures 2 to 4. Although a number of the component parts thereof are of different shapes and designs, like reference numerals have been used to identify parts of the same or similar functions and, where appropriate, the description hereinbefore can be referred to and applied to this embodiment. In accordance with this embodiment of the invention, the coupling device outer quill shaft 20 is not connected directly to the output shaft of the generator. Rather, the drive coupling comprises an outer drive shaft 40 which projects from the housing 22 and cooperates with the output shaft of the generator (not shown). The outer drive shaft 40 is secured to an end of the support rod 26 by a bolt 42. It will be appreciated that cooperation between the outer drive shaft 40 and the support rod 26 limits relative axial movement therebetween and allows axial loadings to be transmitted directly. The bolt 42 allows limited axial movement between the outer drive shaft 40 and the support rod 26 to accommodate axial play in the drive line, and also to allow relative rotation to occur therebetween when the drive coupling is disconnected.

The part of the drive shaft 40 located within the housing 22 is provided, on its outer surface, with a series of spline formations which cooperate with correspondingly shaped spline formations formed on the interior of part of the outer quill shaft 20 to form a splined coupling therebetween. As in the arrangement of Figure 1, the outer quill shaft 20 is supported upon the support rod 26 by support bearings 28. Unlike the arrangement of Figure 1, however, the support rod 26, the outer quill shaft 20 and the support bearings 28 are all located within the housing 22, just the outer drive shaft 40 projecting therefrom.

The inner quill shaft 24 is shaped to form an outer cylindrical wall 24a, the outer surface of which is provided with spline formations cooperating with corresponding formations provided on the rotor 14 to transmit rotary motion of the inner quill shaft 24 to the rotor 14, and an inner cylindrical wall or sleeve 24b to which is secured a component carrying dog clutch formations 24c.

The support rod 26 includes an outwardly projecting flange 26a carrying a cylindrical wall 26b extending adjacent the inner surface of the outer cylindrical wall 24a of the inner quill shaft 24, providing support for the inner quill shaft 24 to substantially prevent radial movement thereof.

The outer quill shaft 20 includes a part 20a which extends within the sleeve 24b. It is this part of the outer quill shaft 20 which is supported by the support bearings 28. The part 20a of the outer quill shaft 20 is of stepped form, including a support section 20b of substantially the same diameter as the inner diameter of the sleeve 24b, the difference in diameter being such that there is a slight radial clearance between the sleeve 24b and support section 20b of the order of 0.001", the cooperation between the support section 20b and the sleeve 24b resulting in the outer quill shaft 20 being supported, in part, by the inner quill shaft 24, and ensuring that the inner and outer quill shafts 20, 24 are correctly aligned with one another in use such that relative radial movement therebetween is avoided or minimised, and so wear thereof is minimised and the application of unnecessary loadings to the support bearings 28 is avoided. The part 20a further includes a section 20c of slightly reduced diameter compared to the support section 20b such that an increased clearance is present between the section 20c and the sleeve 24b relative to that between the sleeve 24b and the support section 20b.

The end of the part 20a carries dog clutch formations 20d adapted to cooperate with the formations 24c of the inner quill shaft 24.

The inner and outer quill shafts 20, 24, support rod 26, and flange 26a and wall 26b thereof, together define a spring chamber 44 within which the spring 34 biasing the inner quill shaft 24 towards the engaged position is provided. It will be appreciated that radial movement of the spring 34 is restricted and so wear or fretting is minimised. The spring chamber 44 is conveniently connected to an oil cavity 46, thereby providing lubrication for the splined couplings and the support bearings 28, avoiding the need to grease these components.

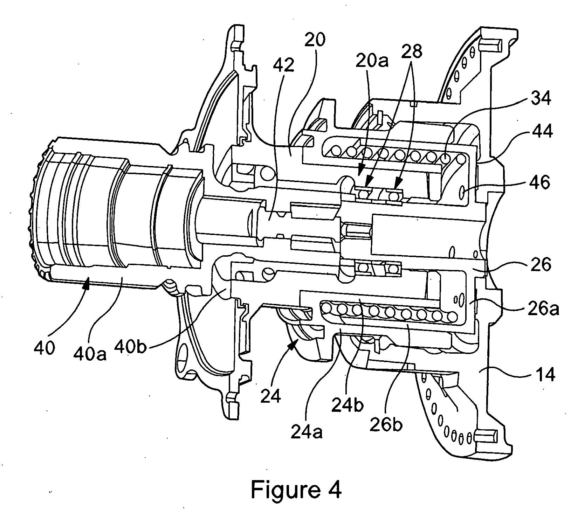

In use, when the drive coupling is connected as shown in Figures 2 and 4, rotation of the outer drive shaft 40 is transmitted to the outer quill shaft 20 via the splined coupling therebetween. The rotation of the outer quill shaft 20 is transmitted via the engaged dog clutch formations 20d, 24c to the inner quill shaft 24 and to the rotor 14 via the splined connection between the inner quill shaft 24 and the rotor 14. The support bearings 28 and cooperation between the support section 20c of the outer quill shaft 20 and the sleeve 24b of the inner quill shaft 24 support the outer quill shaft 20 correctly relative to the inner quill shaft 24 such that relative radial movement therebetween, and so wear therebetween, is avoided or minimised and so that the application of unnecessary loadings to the support bearings 28 is avoided. Also, the possibility of wear impacting upon the operation of the disconnect actuator arrangement 36 is minimised.

In the event of a failure or jam occurring within the generator, as with the arrangement of Figure 1 the actuator arrangement 36 is operated to drive the inner quill shaft 24 for axial movement, disengaging the dog clutch formations 20d, 24c and so interrupting drive transmission between the gearbox and the generator 16. Figure 3 illustrates the drive coupling device in this position. Once the drive from the gearbox to the generator 16 is disconnected in this manner it will be appreciated that, as with the arrangement of Figure 1, continued operation of the gearbox will result in rotation of the outer drive shaft 40. As the transmission of drive to the rotor 14 is interrupted it will be appreciated that the support rod 26 will be static. The support bearings 28 accommodate the rotation of the outer quill shaft 20 relative to the support rod 26 whilst the bolt 42 and support rod 26 serve to limit axial movement of the outer drive shaft 40 during this drive disconnect mode of operation.

The distance through which the inner quill shaft 24 is moved to disengage the dog clutch formations is envisaged to be of the order of 8mm. The axial length of the support section 20b of the part 20a of the outer quill shaft 20 is approximately 4mm, and so the movement of the inner quill shaft 24 results in the support section 20b being completely retracted from the sleeve 24b. As a result, the outer quill shaft 20 is no longer supported by, and does not contact, the inner quill shaft 24. Relative rotation between the inner and outer quill shafts 20, 24 does not therefore result in the risk of friction welding occurring between these components.

It will be appreciated that, in accordance with the invention, a drive coupling is provided in which the risk of wear of the drive coupling components as a result of misalignments is reduced, by accommodating movement resulting from any such misalignments in splined couplings, and by providing additional support to prevent or restrict relative radial movement between the inner and outer quill shafts 20, 24, when engaged with one another.

It is recognised that an alternative solution to the wear problem encountered with the prior art design of Figure 1 could be provided by reducing the radial clearance between the inner quill shaft 24 and the support rod 26. This would reduce relative radial movement between the inner quill shaft 24 and the spacer 30, and hence reduce wear of the engaging end faces. However, this would result in the centrifugal forces and misalignment associated with the drive coupling causing relative radial movement between the respective dog clutch formations on the inner and outer quill shafts 20, 24, which could potentially result in loss of the drive coupling.

In the embodiment illustrated, the outer drive shaft 40 is of two part construction, comprising an outer part 40a which is secured, for example by electron beam welding, to an inner part 40b carrying the spline formations. The two part construction is for convenience only to allow the design to be of compact form, and in arrangements in which a less compact design is acceptable, a single piece design could be used.

Whilst the description hereinbefore is of specific embodiments of the invention, it will be appreciated that a wide range of modifications and alterations may be made thereto without departing from the scope of the invention as defined by the appended claims.

## Claims

1. A drive coupling device comprising an outer drive shaft (40) adapted to be driven for rotation by a gearbox output, an outer quill shaft (20) coupled to the outer drive shaft (40) and arranged to be driven for rotation thereby, an inner quill shaft (24) arranged coaxially with the outer quill shaft (20) and moveable, axially, between an engaged position in which a dog clutch arrangement (20d, 24c) is engaged to transmit drive between the outer quill shaft (20) and the inner quill shaft (24), and a disengaged position in which the dog clutch arrangement (20d, 24c) is disengaged, a support rod (26), and support bearing means (28) provided on the support rod (26) and by which the outer quill shaft (20) is supported for rotation relative to the support rod (26), wherein the outer quill shaft (20) is further supported, when the dog clutch arrangement (20d, 24c) is engaged, by the inner quill shaft (24),
wherein the inner quill shaft (24) includes a sleeve (24b) within which a part of the outer quill shaft (20) is located, the sleeve (24b) providing support for the outer quill shaft (20) when the dog clutch arrangement (20d, 24c) is engaged,
wherein, when the dog clutch arrangement (20d, 24c) is disengaged, the inner and outer quill shafts (20, 24) do not engage one another, and so the outer quill shaft (20) is no longer supported by the inner quill shaft (24),
and wherein the part of the outer quill shaft (20) located, in use, within the sleeve (24b) is conveniently of stepped form, including a support section (20b) which, when the dog clutch arrangement (20d, 24c) is engaged, is located within and engages the sleeve (24b), and which is retracted from the sleeve (24b) when the dog clutch arrangement (20d, 24c) is disengaged, and a reduced diameter section (20c).

2. A device according to Claim 1, wherein the outer drive shaft (40) is coupled to the outer quill shaft (20) by a splined coupling.

3. A device according to any of the preceding claims, wherein an actuator arrangement (36) is provided to drive the inner quill shaft (24) for axial movement relative to the outer quill shaft (20).

4. A device according to any of the preceding claims, wherein the outer drive shaft (40) is of two part form.

## Patentansprüche

1. Antriebskupplungsvorrichtung, die eine äußere Antriebswelle (40), die angepasst ist, zum Drehen von einem Getriebeausgang angetrieben zu werden, eine äußere Hohlwelle (20), die an die äußere Antriebswelle (40) gekoppelt und angeordnet ist, dadurch zum Drehen angetrieben zu werden, eine innere Hohlwelle (24), die koaxial mit der äußeren Hohlwelle (20) angeordnet und zwischen einer eingerückten Position, in der eine Klauenkupplungsanordnung (20d, 24c) eingerückt ist, um zwischen der äußeren Hohlwelle (20) und der inneren Hohlwelle (24) einen Antrieb zu übertragen, und einer ausgerückten Position, in der die Klauenkupplungsanordnung (20d, 24c) ausgerückt ist, bewegbar ist, eine Stützstange (26) und ein Stützlagermittel (28), das auf der Stützstange (26) bereitgestellt ist und durch das die äußere Hohlwelle (20) zum Drehen relativ zur Stützstange (26) gestützt ist, umfasst, wobei die äußere Hohlwelle (20) ferner durch die innere Hohlwelle (24) gestützt wird, wenn die Klauenkupplungsanordnung (20d, 24c) eingerückt ist,
wobei die innere Hohlwelle (24) eine Hülse (24b) beinhaltet, in der sich ein Teil der äußeren Hohlwelle (20) befindet, wobei die Hülse (24b) eine Stützung für die äußere Hohlwelle (20) bereitstellt, wenn die Klauenkupplungsanordnung (20d, 24c) eingerückt ist,
wobei, wenn die Klauenkupplungsanordnung (20d, 24c) ausgerückt ist, die innere und die äußere Hohlwelle (20, 24) nicht ineinander eingerückt sind, derart, dass die äußere Hohlwelle (20) nicht mehr von der inneren Hohlwelle (24) gestützt wird,
und wobei der Teil der äußeren Hohlwelle (20), der sich im Gebrauch in der Hülse (24b) befindet, zweckmäßigerweise eine gestufte Form aufweist, die einen Stützbereich (20b), der sich, wenn die Klauenkupplungsanordnung (20d, 24c) eingerückt ist, in der Hülse (24b) befindet und in diese eingerückt ist und der aus der Hülse (24b) zurückgezogen ist, wenn die Klauenkupplungsanordnung (20d, 24c) ausgerückt ist, und einen Bereich (20c) mit reduziertem Durchmesser beinhaltet.

2. Vorrichtung nach Anspruch 1, wobei die äußere Antriebswelle (40) mittels einer kerbverzahnten Kupplung an die äußere Hohlwelle (20) gekoppelt ist.

3. Vorrichtung nach einem der vorhergehenden Ansprüche, wobei eine Aktuatoranordnung (36) bereitgestellt ist, um die innere Hohlwelle (24) zur Axialbewegung relativ zur äußeren Hohlwelle (20) anzutreiben.

4. Vorrichtung nach einem der vorhergehenden Ansprüche, wobei die äußere Antriebswelle (40) eine zweiteilige Form aufweist.

## Revendications

1. Dispositif de couplage d'entraînement comprenant un arbre d'entraînement externe (40) adapté pour être entraîné en rotation par une sortie de boîte d'engrenages, un arbre de torsion creux externe (20) couplé à l'arbre d'entraînement externe (40) et agencé pour être ainsi entraîné en rotation, un arbre de torsion creux interne (24) agencé de manière coaxiale avec l'arbre de torsion creux externe (20) et mobile, axialement, entre une position engagée dans laquelle un agencement d'embrayage à griffes (20d, 24c) est engagé pour transmettre l'entraînement entre l'arbre de torsion creux externe (20) et l'arbre de torsion creux interne (24), et une position désengagée dans laquelle l'agencement d'embrayage à griffes (20d, 24c) est désengagé, une tige de support (26), et un moyen de palier de support (28) prévu sur la tige de support (26) et grâce auquel l'arbre de torsion creux externe (20) est supporté pour tourner par rapport à la tige de support (26), dans lequel l'arbre de torsion creux externe (20) est en outre supporté, lorsque l'agencement d'embrayage à griffes (20d, 24c) est engagé, par l'arbre de torsion creux interne (24),
dans lequel l'arbre de torsion creux interne (24) comprend un manchon (24b) à l'intérieur duquel une partie de l'arbre de torsion creux externe (20) est positionnée, le manchon (24b) fournissant le support pour l'arbre de torsion creux externe (20) lorsque l'agencement d'embrayage à griffes (20d, 24c) est engagé,
dans lequel, lorsque l'agencement d'embrayage à griffes (20d, 24c) est désengagé, les arbres de torsion creux interne et externe (20, 24) ne sont pas mis en prise entre eux, et ainsi l'arbre de torsion creux externe (20) n'est plus supporté par l'arbre de torsion creux interne (24),
et dans lequel la partie de l'arbre creux externe (20) positionnée, en utilisation, à l'intérieur du manchon (24b) a commodément une forme étagée, comprenant une section de support (20b) qui, lorsque l'agencement d'embrayage à griffes (20d, 24c) est engagé, est positionnée à l'intérieur et engage le manchon (24b), et qui est rétractée du manchon (24b) lorsque l'agencement d'embrayage à griffes (20d, 24c) est désengagé, et une section de diamètre réduit (20c).

2. Dispositif selon la revendication 1, dans lequel l'arbre d'entraînement externe (40) est couplé à l'arbre de torsion creux externe (20) par un couplage cannelé.

3. Dispositif selon l'une quelconque des revendications précédentes, dans lequel un agencement d'actionneur (36) est prévu pour entraîner l'arbre de torsion creux interne (24) en mouvement axial par rapport à l'arbre de torsion creux externe (20).

4. Dispositif selon l'une quelconque des revendications précédentes, dans lequel l'arbre d'entraînement externe (40) a une forme en deux parties.
